Europäisches Patentamt

European Patent Office

Office européen des brevets

(19)

(11) Veröffentlichungsnummer: **0 016 413**
**B1**

(12)  # EUROPÄISCHE PATENTSCHRIFT

(45) Veröffentlichungstag der Patentschrift:
31.08.83

(21) Anmeldenummer: 80101279.0

(22) Anmeldetag: 12.03.80

(51) Int. Cl.³: **H 04 M 15/04**

(54) **Schaltungsanordnung zur Ermittlung des Ursprungsbereiches einer Fernsprechverbindung.**

(30) Priorität: 21.03.79 DE 2911150

(43) Veröffentlichungstag der Anmeldung:
01.10.80 Patentblatt 80/20

(45) Bekanntmachung des Hinweises auf die Patenterteilung:
31.08.83 Patentblatt 83/35

(84) Benannte Vertragsstaaten:
DE FR GB IT SE

(56) Entgegenhaltungen:
DE-A-2 743 659
DE-A-2 843 766
DE-C-1 093 425

IBM TECHNICAL DISCLOSURE BULLETIN Band 20, Nr.
12, Mai 1978 NEW YORK (US) FF. DALE et al.: «Computer-controlled toll recording», Seiten 5114–5115

(73) Patentinhaber: SIEMENS AKTIENGESELLSCHAFT,
Berlin und München Wittelsbacherplatz 2,
D-8000 München 2 (DE)

(72) Erfinder: Wagner, Karl, Alfred-Schmidt-Strasse 29,
D-8000 München 70 (DE)

Schaltungsanordnung zur Ermittlung des Ursprungsbereiches einer Fernsprechverbindung

Die Erfindung betrifft eine Schaltungsanordnung zur Ermittlung der Identität einer Übertragung in Fernmelde-, insbesondere Fernsprechanlagen, die für sich oder als eine von mehreren jeweils einem bestimmten, durch eine ankommende Verbindungsleitung individuell gekennzeichneten Ursprungsbereich fest zugeordnet sind somit einzeln beim Aufbau einer Fernsprechverbindung, insbesondere einer internationalen Fernsprechverbindung abhängig von dem Ursprungsbereich des rufenden Teilnehmers belegbar sind, und vermittels entsprechend einstellbarer Schaltorgane ein dem Zeichenaustausch dienender Steuerweg zu einem Umwerter, der u. a. Informationen für die weiterführende Verbindungsherstellung und für die Zuordnung eines Gebührentaktes liefert, individuell durchschaltbar ist, wobei nach Anforderung des Umwerters von diesem zur Feststellung der jeweils belegten Übertragung die Aussendung eines Prüfsignals über den diesbezüglich eingestellten Steuerweg zurück zum Umwerter veranlasst wird und dieses Prüfsignal jeweils in Zuordnung zu einem Ursprungsbereich von einem diesen jeweiligen Bereich für die weitere Auswertung kennzeichnenden Indikationsschaltmittel registrierbar ist, vgl. z. B. DE-C-1 093 425.

Insbesondere für die Tarifermittlung von internationalen Fernsprechverbindungen, die im Selbstwählferndienst aufgebaut werden, muss in der Leitwegsteuerstelle des sogenannten Auslandskopfamtes u. a. der jeweilige Ursprungsbereich einer derartigen Verbindung bekannt sein. Aus der Länderkennzahl, die ein Teilnehmer als Wahlinformation aussendet, ist es ersichtlich, dass es sich um eine in diesem Amt zu verzonende Verbindung handelt. Der den einzelnen Fernleitungen zugeordnete Auslands-Zählimpulsgeber leitet die über ein entsprechendes Register vorzunehmende Anschaltung an einen zentralen Umwerter ein. Sobald vom betreffenden und während des Verbindungsaufbaues belegbaren Register beispielsweise das richtungsbestimmende Teil der Wahlinformationen aufgenommen ist, wird ein Anforderungssignal für den Umwerter gebildet. Von diesem werden dann u. a. die für den Aufbau des weiterführenden Verbindungsweges notwendigen Einstellinformationen dem Register übergeben. Weiterhin werden durch ihn die für die Gebührenermittlung notwendigen Informationen gebildet. Da die ankommenden Fernwahlübertragungen jeweils einzeln oder gruppenweise bestimmten und damit den jeweiligen Ursprungsbereich festlegenden Verbindungsleitungen fest zugeordnet sind, kann dieser jeweilige Ursprungsbereich durch die Abfrage der jeweils belegten Übertragung ermittelt werden. Hierzu kann vom Umwerter auf eine entsprechende Anforderung hin über das belegte Register und über den weiter bis zu der jeweiligen Übertragung eingestellten Steuerweg ein Prüfsignal übertragen werden. Von dort gelangt dann dieser Impuls zu einer jedem möglichen Ursprungsbereich fest zugeordneten Empfangsschaltung im Umwerter. Durch das Ansprechen einer der Empfangsschaltungen ist damit der jeweils zugeordnete Ursprungsbereich bekannt. Es ist nun davon auszugehen, dass dieser Prüfkreis aufgrund der räumlichen Anordnung der jeweiligen Übertragungen und des Umwerters innerhalb des betreffenden Amtes eine längere Systemkabelstrecke einschliesst. Dadurch besteht die Gefahr, dass sich durch eingekoppelte Störimpulse, die in der Grössenordnung des Nutzprüfimpulses liegen, Fehlauswertungen ergeben. Eine derartige Falschaussage kann sich auch dann ergeben, wenn aufgrund einer fehlerhaften Berührung einzelner Prüfadern eine andere als die der belegten Übertragung zugeordnete Empfangsschaltung anspricht. Durch Leitungsbeeinflussung könnte auch ein eingespeistes Prüfsignal in seiner Amplitude derart verändert werden, dass die Empfangsschaltung nicht mehr anspricht. Durch die DE-A-2 743 659 und DE-A-2 843 766, die jeweils ein bestimmtes Fernsprechsystem beschreiben, ist es bekannt zur Ein- und Auskopplung von Zustandsinformationen bzw. von durch eine Teilnehmerstelle gewählten Wahlkennzeichen in einem entsprechenden Schaltkreis Optokoppler zu verwenden. Dadurch wird die galvanische Trennung einer Informationssignale führenden Leitung von Einheiten, in denen eine Bewertung der Signale folgt, ermöglicht.

Es ist die Aufgabe der Erfindung eine Ursprungsfeststellung der eingangs genannten Art zu ermöglichen, bei der die zu unzutreffenden Auswertungen führenden Störbeeinflussungen sich nicht mehr auswirken können.

Dies wird dadurch erreicht, dass als Indikationsschaltmittel für das jeweils erdfrei eingespeiste Prüfsignal ein optoelektronisches Koppelelement verwendet wird, dass bezogen auf jeden in der genannten Weise gebildeten Prüfkreis für die endgültige Registrierung eines darin auftretenden Signals eine an die zu erwartende Störimpulsdauer angepasste Verzögerungszeit zu überwinden ist, dass zunächst unabhängig von einer vorgenommenen Registrierung die Einspeisung des Prüfsignals zumindest für eine über die maximal auftretende Verzögerungszeit hinausgehende Zeitspanne weiter aufrechterhalten wird und dass eine während dieser Zeitspanne vorgenommene mehrfache Registrierung zusätzlich angezeigt wird.

Durch die Verwendung eines optoelektronischen Koppelelementes als Indikationsschaltmittel ist es neben dem dadurch gegebenen Schutz gegen hohe statische Einkopplungsspannungen möglich, die Prüfimpulse hinsichtlich ihrer Amplitude und Zeitdauer den u. a. durch die Schaltungsgegebenheiten vorhandenen Bedingungen in optimaler Weise anzupassen. Die Amplitude des Prüfsignals kann so gewählt werden, dass eine beispielsweise durch Leitungsbeeinflussung bedingte starke Abflachung sich nicht nachteilig auswirken kann. Durch die vorgesehene Ansprechverzögerung für das jeweilige Indikationsschaltmittel kann die Auswirkung von Störimpulsen grösstenteils verhindert werden. Es können jedoch auch Störimpulse vorkommen, die die im Mittel zu erwartende Störimpulsdauer überschreiten und damit das Indikationsschaltmittel ansprechen lassen. Würde man die als Ergebnis der vorzunehmenden Ursprungsfeststellung werten, so würde dadurch eine unrichtige Aussage abgeleitet werden. Weiterhin können die für jedes Indikationsschaltmittel vorgesehenen Verzögerungszeiten aufgrund nicht völlig identischer und die Verzögerung bewirkender Bauelemente untereinander streuen, so dass die Möglichkeit besteht, dass ein Störimpuls vor einem zur gleichen Zeit eingespeisten Prüfsignal ausgewertet wird und zu einer Falschaussage führt. Als Störimpuls kann auch ein Impuls auftreten, der sich infolge einer fehlerhaften galvanischen Berührung zweier Übertragungsadern von einem eingespeisten Nutzimpuls ableitet. Derartige Störimpulse, die eine vorhandene Verzögerungszeit überwinden, lassen sich dadurch erkennen, dass erfindungsgemäss die mit der Einspeisung eines Prüfsignals eingeleitete Ursprungsfeststellung nicht unmittelbar mit dem Ansprechen eines Indikationsschaltmittels als beendet betrachtet wird. Trotz einer derartigen Registrierung liegt das Prüfsignal weiterhin während einer Zeitdauer an, die die maximale auftretende Verzögerungszeit überschreitet. Das bedeutet, dass aufgrund eines eingespeisten derartigen Prüfsignales in jedem Fall auch das zugeordnete Indikationsschaltmittel ansprechen muss. Hat beginnend mit dem Einspeisezeitpunkt bereits ein anderes Indikationsschaltmittel angesprochen, so kann man daraus schliessen, dass für diesen jeweiligen Prüfungsfall eine Störung vorliegt. Diese Störung kann beispielsweise durch eine fehlerhafte galvanische Berührung zweier Adern des von den Übertragungen zum Umwerter führenden Systemkabels verursacht sein. Da die aufgrund eines Prüfsignals fehlerhafte Mehrfachregistrierung erfindungsgemäss erfasst und angezeigt wird, kann somit ein derartiger Fehler erkannt werden. Eine Beseitigung einer derartigen Fehlerursache kann beispielsweise immer dann vorgesehen werden, wenn eine bestimmte Fehlerhäufigkeit während des Ablaufs eines bestimmten Zeitraums überschritten wird. Die erfindungsgemässe Verlängerung in der Zeitdauer eines eingespeisten Prüfsignals wird durch die Anwendung des optoelektronischen Koppelelementes als Indikationsschaltmittel ermöglicht. Würde man hierfür Übertrager verwenden, so ist unter der Voraussetzung von Übertragern wirtschaftlich sinnvoller Grössenordnung eine Beschränkung des auswertbaren Prüfsignals hinsichtlich seiner Zeitdauer als gegeben hinzunehmen. Gleichzeitig würde sich dadurch die Wahrscheinlichkeit erhöhen, dass Störimpulse in der Grössenordnung des Prüfsignales liegen. Durch das erfindungsgemässe statische Auswerteprinzip kann demgegenüber trotz eines Störimpulses der sich eventuell vor dem Registrieren des tatsächlichen Prüfsignals durchsetzt, eine diesbezügliche Signalisierung erfolgen und es können notfalls die notwendigen Schritte für eine Fehlerbeseitigung eingeleitet werden.

Gemäss einer Weiterbildung der Erfindung wird die wirksame Ansteuerung für das die erdfreie Einspeisung des Gleichspannungs-Prüfsignals bewirkenden Steuerelementes beginnend mit dem bei einer erfolgten Registrierung erzeugten Signal durch ein damit angestossenes Zeitglied für die vorgegebene Zeitspanne ermöglicht.

Als Steuerelement kann beispielsweise ein weiteres optoelektronisches Koppelelement verwendet werden. Durch dieses kann für die erdfreie Einspeisung beispielsweise eine über einen Spannungswandler abgeleitete Gleichspannung als Prüfsignal angelegt werden.

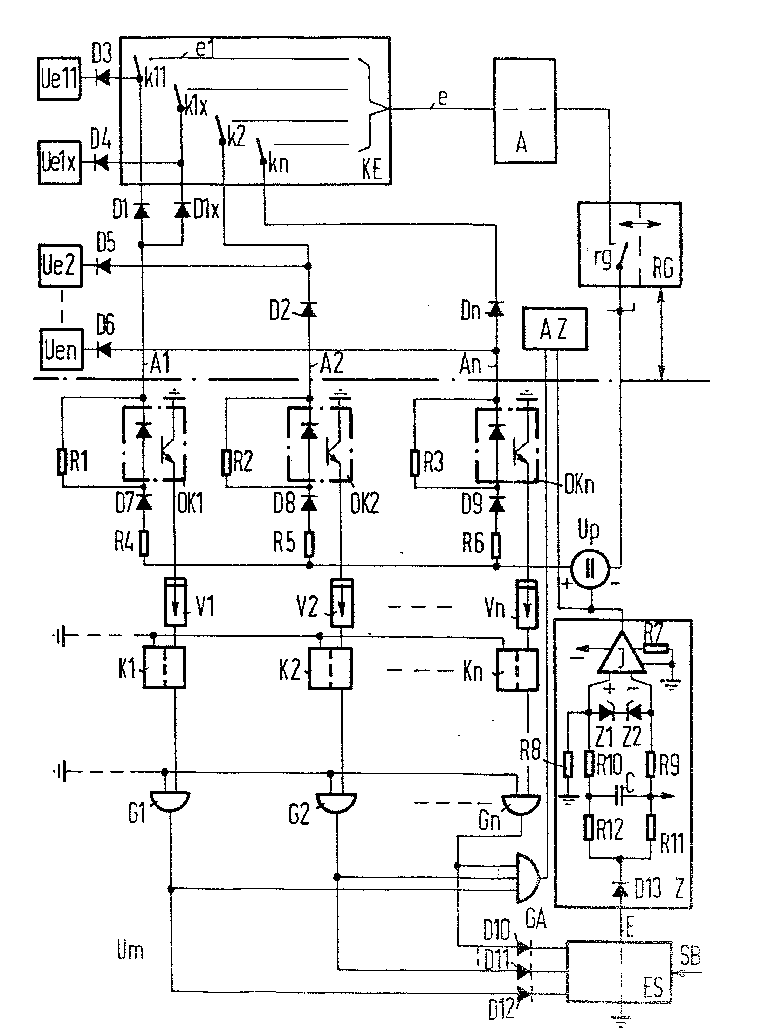

In der Zeichnung ist ein Ausführungsbeispiel der Erfindung dargestellt, das lediglich die für das Verständnis erforderlichen Einzelheiten enthält.

Die Übertragungen Ue1 bis Uen sollen als ankommende Übertragungen in einer Vermittlungsstelle angeordnet sein, die als sogenanntes Auslandskopfamt die Übertragungsstelle zwischen dem nationalen und dem internationalen Fernsprechverkehr darstellt. Die einzelnen Übertragungen UE sind gruppenweise oder einzeln den ankommenden Leitungen aus einem bestimmten Ursprungsbereich fest zugeordnet. Diese Ursprungsbereiche müssen für die Tarifermittlung von im Selbstwählferndienst aufgebauten Auslandsfernsprechverbindungen bekannt sein. Es muss also durch eine Ursprungserfassung festgestellt werden, welche Übertragung jeweils belegt ist, da dann aufgrund der genannten festen Zuordnung dieser Ursprungsbereich feststeht. Für die notwendige Abfrage werden die Übertragungen eines Ursprungsbereiches zu einer Gruppe zusammengefasst, die über eine entsprechende Diodenrangierung mit der jeweils zugeordneten Auswerteschaltung gekoppelt sind. Diese gruppenweise Zusammenfassung ist für einen Ursprungsbereich durch die Übertragungen Ue11 bis Ue1x angedeutet. Für die übrigen Ursprungsbereiche ist jeweils nur eine Übertragung Ue2 bis Uen dargestellt. Diese können durch in gleicher Weise wie die dem zuerst genannten Ursprungsbereich zugeordneten Übertragungen gruppenweise zusammengefasst sein.

Die einzelnen Übertragungen erfüllen Durchschalte- und Umsetzfunktionen und verarbeiten neben Wahlkennzeichen die für die Steuerung des Verbindungsaufbaus notwendigen weiteren Schaltkennzeichen. Mit jeder Belegung einer derartigen Übertragung wird über eine Koppeleinrichtung KE durch Betätigung eines zugeordneten Kontaktes k eine Verbindung mit einem Register RG hergestellt. Diese während des Verbindungsaufbaus benötigten Register sind mehrfach vorhanden. Ihre Anzahl ist jedoch gegenüber der Anzahl der Übertragungen wesentlich geringer. Die Auswahl eines jeweils freien Registers erfolgt über das Auswahlschaltglied A. Über einen Kontakt rg des jeweils belegten Registers erfolgt dann, ausgehend von der belegten Übertragung über einen Kontakt der Koppeleinrichtung KE, die galvanische Durchschaltung, beispielsweise einer Steuerader, zu einer einem Umwerter Um zugeordneten erdfreien Spannungsquelle Up. Das jeweils belegte Register RG nimmt unter anderem die Wahlimpulsserien auf und fordert bei einer ausreichenden Information den Umwerter an, um von ihm Informationen für den weiteren Verbindungsaufbau und für die erforderliche Einstellung der Gebührenerfassungseinrichtungen zu erhalten. Für den zuletzt genannten Zweck muss der Ursprung der jeweils aufzubauenden Verbindung bekannt sein. Die erforderliche Feststellung der jeweils belegten Übertragung und damit des jeweiligen Ursprungsbereiches wird folgendermassen vorgenommen:

Von dem Register, das jeweils über eine Verbindungsader, beispielsweise der Steuerader e, mit der belegten Übertragung verbunden ist, wird für die Durchführung des notwendigen Informationsaustausches der Umwerter Um angefordert. Im Rahmen dieses Informationsaustausches ist die Feststellung dieser belegten Übertragung erforderlich. Hierzu wird zunächst aufgrund des Anforderungssignales des belegten Registers für den elektronischen Schalter ES ein Durchschaltebefehl SB abgeleitet. Dadurch wird an dem Schaltungspunkt E Erdpotential angelegt. Dieses Erdpotential führt dann nach einer kurzen durch den Widerstand R12 und dem Kondensator C verursachten Ansprechzeit zu einem entsprechenden Ausgangssignal an dem Operationsverstärker J und damit am Ausgang der Zeitstufe Z. Dieses Ausgangssignal soll dazu führen, dass die erdfreie Spannungsquelle Up wirksam in einen Prüfkreis eingeschaltet wird und damit ein erdfreies Gleichspannungssignal als Prüfsignal einspeist. Ausgehend von dieser Spannungsquelle Up verläuft dieser Prüfkreis über den jeweils durch das belegte Register betätigten Kontakt rg, über das die Einstellung zum Register vornehmende Auswahlschaltglied A und über eine Steuerader, beispielsweise die Steuerader e, e1 und den unter der Voraussetzung der Belegung der Übertragung Ue11 geschlossenen Kontakt k11 zu der Übertragung. Bei der Belegung einer anderen Übertragung wäre dann der ihr fest zugeordnete Kontakt k der Koppeleinrichtung KE entsprechend geschlossen. Die Dioden D3 bis D6 dienen der Entkopplung.

Von dem jeweiligen Kontakt verläuft dann der Prüfkreis weiter über eine Diodenrangierung D1, D1x bzw. D2 oder Dn zu einem als Indikationsschaltmittel eingeschalteten optoelektronischen Koppelelement OK und über einen Begrenzungswiderstand R4 bzw. R5 oder R6 für das Koppelelement Okn zurück zum anderen Pol der erdfreien Gleichspannungsquelle. Diese das jeweilige Prüfsignal erzeugende Gleichspannungsquelle kann beispielsweise durch einen Spannungswandler realisiert sein, der das Prüfsignal von der gleichgerichteten sekundärseitigen Ausgangsspannung liefert. Die wirksame Anschaltung könnte wiederum durch ein optoelektronisches Koppelelement beiwirt werden, das seinerseits durch das Ausgangssignal des Operations-Verstärkers I der Zeitstufe Z gesteuert wird. Jedem Ursprungsbereich können, wie bereits eingangs ausgeführt, mehrere Übertragungen zugeordnet sein. Dies ist lediglich für einen Ursprungsbereich, beispielsweise für den Ursprungsbereich 1, durch die Übertragungen Ue11 bis Ue1x angedeutet. Die übrigen Übertragungen sind lediglich als Einzelübertragungen dargestellt, sie bestehen jedoch in der Praxis ebenfalls aus einer Reihe solcher Übertragungen pro Ursprungsbereich. Die einzelnen Übertragungen eines jeden Ursprungsbereiches werden durch eine Diodenrangierung zusammengefasst. Dies erfolgt für die im genannten Beispiel dem Ursprungsbereich 1 zugeordneten Übertragungen durch die Dioden D1 bis D1x. Für die den anderen Ursprungsbereichen zugeordneten Übertragungen ist die jeweilige Diodenrangierung für den Ursprungsbereich 2 durch die Diode D2 und für den Ursprungsbereich n durch die Diode Dn symbolisch dargestellt. Von jeder Diodenrangierung führt eine Ader zu einem ein anliegendes Prüfsignal auswertenden optoelektronischen Koppelelement OK. Diese Koppelelemente sind räumlich dem vorhandenen Umwerter zugeordnet. Diese Adern A1, A2 bis An führen also vom Ort der Übertragungen zum Umwerter. Das durch diese Leitungsadern gebildete Systemkabel kann unter Umständen aufgrund der räumlichen Gegebenheiten eine Länge von mehreren hundert Metern erreichen. Jede demnach ein Ursprungsbündel kennzeichnende Ader führt wie bereits geschildert, zu einem optoelektronischen Koppelelement des Umwerters. In dem Ausführungsbeispiel sind dies die Koppelelemente OK1, OK2 bis OKn für das n-te Ursprungsbündel. Der Widerstand, der jeweils zu der Diodenstrecke eines optoelektronischen Koppelelementes parallelgeschaltet ist, dient dazu, bestimmte Fehlstrombedingungen zu erfüllen. Dies sind demnach die Widerstände R1, R2 bzw. R3. Die diesen Optokopplern OK jeweils in Reihe geschalteten Dioden, also die Dioden D7 bis D9 dienen der Entkopplung. Das mit der Durchschaltung der Transistorstrecke eines jeden optoelektronischen Koppelelementes erzeugte Ausgangssignal wird jeweils über ein Verzögerungsglied V zum Setzen einer Kippstufe K verwendet. Der Ausgang dieser jeweiligen Kippstufe ist mit dem einen Eingang eines Gatters G verbunden, dessen anderer Eingang auf einem vorgegebenen Bezugspotential liegt. Diese Potentiale sind so gewählt, dass mit der Umsteuerung der Kippstufe das Gatter durchlässig ist und somit ein Ausgangssignal liefert, das jeweils über eine Entkopplungsdiode den Durchgang des Schalters ES sperrt. In gleicher Weise wie die optoelektronischen Koppelelemente sind die genannten Verzögerungsglieder mit V1 bis Vn, die bistabilen Kippstufen mit K1 bis Kn und die genannten Gatter mit G1 bis Gn bezeichnet. Es werde angenommen, dass der das optoelektronische Koppelelement OK1 enthaltende Prüfkreis wirksam geschlossen ist, so dass also durch die Spannungsquelle Up ein Prüfsignal in diesen Kreis eingespeist wird. Dies erfolgt, wie bereits geschildert, durch die wirksame Einfügung dieser Spannungsquelle aufgrund eines entsprechenden Steuersignals, das von der insbesonderde die Abschaltung beeinflussenden Zeitstufe Z abgegeben wird. Dieser Steuerbefehl könnte auch unmittelbar mit der Durchschaltung des elektronischen Schalters ES angelegt werden und das Zeitglied, dessen Funktion später noch erläutert wird, in dem Sperrkreis dieses Schalters angeordnet sein.

Das mit dem wirksamen Anschalten der erdfreien Spannungsquelle Up eingespeiste Prüfsignal lässt nun auf dem Wege über den vom Register betätigten Kontakt rg, dem beispielsweise bei Belegung der ankommenden Übertragung Ue11 betätigten Koppelkontakt k11 und über die Diode D1 das als Indikationsschaltmittel in dem Prüfkreis fest angeordnete optoelektronische Koppelelement OK1 ansprechen. Das Durchschalten der Transistorstrecke dieses optoelektronischen Koppelelementes wird nun nicht unmittelbar als Ausgangsinformation weitergegeben, sondern dies erfolgt mit einer gewissen Verzögerungszeit. Diese Verzögerung wird durch das Verzögerungsglied V1 erzielt, dessen Verzögerungszeit in gleicher Weise wie die Verzögerungszeit der übrigen den anderen optoelektronischen Koppelelementen nachgeschalteten Verzögerungsglieder, auf die in der Regel zu erwartende Zeitdauer von eingekoppelten Störimpulsen abgestimmt ist. Dadurch können im Regelfall derartige Störimpulse nicht zu einem Ansprechen der weiteren Auswerteelemente führen. Durch das eingespeiste Prüfsignal wird die durch das Verzögerungsglied V1 vorgegebene Ansprechzeit überwunden und mit dem entstehenden Ausgangssignal die nachgeordnete Kippstufe K1 geschaltet. An ihrem mit dem Gatter G1 verbundenen Ausgang entsteht ein Signal, das dem am anderen Eingang des Gatters G1 anliegenden Signal entspricht, so dass dieses durchlässig wird und somit ein entsprechendes Ausgangssignal erzeugt. Dieses Ausgangssignal beeinflusst nun über die diesem Ausgang zugeordnete Entkopplungsdiode D12 den elektronischen Schalter ES derart, dass er vom geschlossenen in den offenen Zustand übergeht. Damit wird das aufgrund der vorgenommenen Anforderung angelegte Signal, beispielsweise in Form des Erdsignals, das die wirksame Anschaltung der Spannungsquelle verursacht, abgeschaltet.

Diese Tatsache bewirkt nun nicht die sofortige Abschaltung der Gleichspannungsquelle von dem durchgeschalteten Prüfkreis, sondern es wird diese Anschaltung und somit die Einspeisung des Prüfsignals noch kurzzeitig aufrechterhalten. Dies wird durch das Zeitglied Z erreicht. Bei der für das Zeitglied Z dargestellten Ausführungsform liegt im durchgeschalteten Zustand des elektronischen Schalters ES am Ausgang Minuspotential, durch das die wirksame Anschaltung der Spannungsquelle Up vorgenommen wird. Greift nun aufgrund des Sperrsignals, das im angenommenen Beispiel vom Ausgang des Gatters G1 abgegeben wird, das die Zeitstufe steuernde Erdpotential nicht mehr durch, so wird der geladene Kondensator C über die Widerstände R11 und R12 entladen. Solange der sich bei dieser Entladung ergebende Spannungswert über dem Spannungswert liegt, der aufgrund der Widerstände R10 und R8 als Bezugsspannungswert für das Ansprechen des Operations-Verstärkers I vorgegeben ist, bleibt das die Anschaltung der Gleichspannungsquelle verursachende Ausgangspotential dieses Verstärkers erhalten. Erst mit dem Unterschreiten dieser vorgegebenen Bezugsspannung durch die sich am Kondensator einstellende Spannung ändert sich das Ausgangspotential in der Weise, dass dadurch die wirksame Anschaltung der Gleichspannungsquelle beendet ist. Die zwischen den Eingängen des Verstärkers I geschalteten Zehnerdioden stellen Schutzdioden dar, da die Differenz zwischen diesen Eingängen einen bestimmten Wert nicht überschreiten darf. Der Widerstand R9 stellt ebenfalls einen Schutzwiderstand dar. Die in der geschilderten Weise sich auswirkende Zeitstufe Z ist derart ausgelegt, dass vom Zeitpunkt der Sperrung des elektronischen Schalters ES die wirksame Anschaltung der Gleichspannungsquelle etwa noch eine Millisekunde aufrechterhalten wird. Dies hat für die Sicherheit der Aussage einer derartigen Prüfung eine wesentliche Bedeutung. Es kann davon ausgegangen werden, dass die Verzögerungszeiten der einzelnen Verzögerungsglieder V aufgrund ihrer nicht völlig identischen Bauelemente etwas voneinander abweichen. Dies könnte nun dazu führen, dass ein auf einer anderen Ader des Systemkabels eingekoppelter Störimpuls der in etwa mit dem eingespeisten Prüfsignal zeitlich übereinstimmt, aufgrund der erwähnten Streuung in der Verzögerungszeit die Ansprechschwelle überwindet und in der geschilderten Weise zu einem Ausgangssignal am Gatter G2 und damit zur Sperrung des elektronischen Schalters führt. Würde nun unmittelbar die Abschaltung der Spannungsquelle vorgenommen werden, so könnte das ursprüngliche Prüfsignal nicht registriert werden, da es nicht mehr zur Einstellung der den tatsächlichen Prüfweg kennzeichnenden Kippstufe K1 führen kann. Das bedeutet, dass die vorgenommene Prüfung zu einem falschen Ergebnis führen würde. Da jedoch das Prüfsignal kurzzeitig noch weiter aufrechterhalten wird, kann über das dem eigentlichen Prüfkreis zugeordnete Indikationsschaltmittel, nämlich dem Optokoppler OK1 über das nachgeschaltete Verzögerungsglied die Kippstufe ansprechen. Aufgrund einer einzigen vom jeweils belegten Register ausgehenden Anforderung, die der Umwerter verarbeitet, werden also im Störungsfalle mindestens zwei in Form der Kippstufen vorhandenen Kennzeichnungsschaltmittel aktiviert. Diese Tatsache kann über die Anzeigeeinheit AZ registriert und wahrnehmbar gemacht werden. Dies kann beispielsweise dadurch erfolgen, dass die Ausgänge der einzelnen Gatterschaltungen G1 bis Gn über das UND-Gatter GA zusammengefasst sind. Die an seinem Ausgang auftretenden Impulse werden der Anzeigeeinheit AZ zugeführt. Diese Anzeigeeinheit soll jeweils während der Zeit, in der von der Zeitstufe das Steuersignal für die Gleichspannungsquelle anliegt, aufnahmebereit geschaltet sein. Aus der Tatsache, dass während dieser einem Prüfsignal entsprechenden Zeitdauer beispielsweise zwei Impulse registriert werden, wird ein Störungsfall erkannt. Diese einzelnen Störungsfälle können aufsummiert werden und es kann bei Erreichen eines vorgegebenen Alarmgrenzwertes eine entsprechende Signalisierung erfolgen. Eine derartige Doppelaussage bei einer angeforderten Ursprungsfeststellung könnte auch dadurch verursacht sein, dass in fehlerhafter Weise zwei Adern des Systemkabels sich galvanisch berühren. Dadurch würde ein über eine Ader verlaufender Nutzimpuls auf der anderen Ader als Störimpuls erscheinen. Da derartige Vorgänge für die Ursprungsfeststellung in sehr grosser Anzahl ablaufen, würde bei einem derartigen Störungsfalle der Alarmgrenzwert innerhalb kurzer Zeit erreicht werden, so dass damit, z.B. durch Adernberührungen verursachte Fehler erkennbar werden. Die Auswertung durch den Umwerter für die erforderliche Tarifermittlung erfolgt beim Ansprechen von zwei Kennzeichnungsschaltmitteln K in der Weise, dass derjenige Ursprungsbereich als gültig gewertet wird, der dem billigeren Tarif der beiden zuzuordnenden Tarife entspricht. Ohne die Möglichkeit, Fehler, die durch Adernberührung verursacht werden baldmöglichst zu erkennen, würden sich somit für die Fernsprechverwaltungen finanzielle Einbussen ergeben. Durch eine ausreichende Einspeisezeitdauer des Nutzimpulses werden diejenigen Fälle erkannt, in denen sich ein Störimpuls vor diesem Nutzimpuls zunächst durchsetzt und zu einem Ansprechen eines Kennzeichnungsschaltmittels führt.

Bei Anwendung von Übertragern als Indikationsschaltmittel wäre diese Art der Feststellung äusserst problematisch, da bei dem damit vorausgesetzten dynamischen Auswerteprinzip die Zeitdauer der abgeleiteten Auswerteimpulse begrenzt ist. Bei einer Einspeisung des Nutzsignals über einen entsprechenden Sendeübertrager könnte es vorkommen, dass die Amplitude keine ausreichende Reserve gegenüber durch Leitungsbeeinflussungen bedingte Abflachungen des jeweiligen Impulses hat. Dies könnte dann dazu führen, dass die Empfangsschaltung nicht anspricht. Dies wird bei der für das Ausführungsbeispiel geschilderten Art der Einspeisung ausgeschlossen, da das Nutzsignal bei dem angewendeten statischen Auswerteprinzip hinsichtlich seiner Amplitude und der Zeitdauer so gewählt werden kann, dass in Verbindung mit den optoelektronischen Koppelelementen als Indikationsschaltmittel das Nutzsignal genügend sicher zur Wirkung kommt.

## Patentansprüche

1. Schaltungsanordnung zur Ermittlung der Identität einer Übertragung in Fernmelde-, insbesondere Fernsprechanlagen, die für sich oder als eine von mehreren jeweils einem bestimmten, durch eine ankommende Verbindungsleitung individuell gekennzeichneten Ursprungsbereich fest zugeordnet sind und somit einzeln beim Aufbau einer Fernsprechverbindung, insbesondere einer internationalen Fernsprechverbindung abhängig von dem Ursprungsbereich des rufenden Teilnehmers belegbar sind, und vermittels entsprechend einstellbarer Schaltorgane ein dem Zeichenaustausch dienender Steuerweg zu einem Umwerter, der u.a. Informationen für die weiterführende Verbindungsherstellung und für die Zuordnung eines Gebührentaktes liefert, individuell durchschaltbar ist, wobei nach Anforderung des Umwerters von diesem zur Feststellung der jeweils belegten Übertragung die Aussendung eines Prüfsignals über den diesbezüglich eingestellten Steuerweg zurück zum Umwerter veranlasst wird und dieses Prüfsignal jeweils in Zuordnung zu einem Ursprungsbereich von einem diesen Bereich für die weitere Auswertung kennzeichnenden Indikationsschaltmittel registrierbar ist, dadurch gekennzeichnet, dass als Indikationsschaltmittel für das jeweils erdfrei eingespeiste Prüfsignal ein optoelektronisches Koppelelement (OK) verwendet wird, dass bezogen auf jeden in der genannten Weise gebildeten Prüfkreis für die endgültige Registrierung (K) eines darin auftretenden Signals eine an die zu erwartende Störimpulsdauer angepasste Verzögerungszeit (V) zu überwinden ist, dass zunächst unabhängig von einer vorgenommenen Registrierung die Einspeisung des Prüfsignals (Up) zumindest für eine über die maximal auftretende Verzögerungszeit hinausgehende Zeitspanne (Z) aufrechterhalten wird und dass eine während dieser Zeitspanne vorgenommene mehrfache Registrierung zusätzlich angezeigt (AZ) wird.

2. Schaltungsanordnung nach Anspruch 1, dadurch gekennzeichnet, dass die wirksame Ansteuerung für das die erdfreie Einspeisung des ein Gleichspannungssignal darstellenden Prüfsignals bewirkenden Steuerelementes beginnend mit dem bei einer erfolgten Registrierung erzeugten Signal (Ausgangssignal von G) durch ein damit angestossenes Zeitglied (Z) für die vorgegebene Zeitspanne ermöglicht wird.

## Claims

1. Circuit arrangement for determining the identity of a transmission in telecommunications systems, in particular telephone systems, which by themselves or as one of a plurality are firmly assigned to a specific source region, which is individually characterised by an incoming connection line, and can thus be individually seized in dependence upon the source region of the calling subscriber during the establishment of a telephone connection, in particular as international telephone connection, and by means of appropriately adjustable switching elements, a control path, which serves for the character exchange, can be individually switched through to a converter which inter alia supplies items of information for the continuing connection establishment and for the assignment of a charging pulse train, where upon request of the converter, in order to determine the respectively seized transmission, the emission of a test signal is initiated by the subscriber via the relevant operational control path, back to the converter and this test signal can in each case be registered in assignment to a source region by an indication switching means which characterises this region for the further analysis, characterised in that an opto-electronic coupling element (OK) is used as indication switching means for the respective test signal fed in earth-free fashion, that in respect of each test circuit, which is formed in the aforesaid manner, for the final registration (K) of a signal occurring therein, a delay time (V), which is adapted to the interference pulse duration to be expected is to be overcome, that independently of an effected registration the feed of the test signal (Up) is firstly maintained at least for a time interval (Z) exceeding the maximum occurring delay time, and that a multiple registration which is carried out during this time interval is additionally displayed (AZ).

2. Circuit arrangement as claimed in claim 1, characterised in that the effective actuation for the control element, which effects the earth-free feed of the test signal representing a direct voltage, commencing with the signal (output signal of G), which is produced when a registration is carried out, is facilitated by a time element (Z), which is activated by said signal, for the predetermined time interval.

**Revendications**

1. Montage pour déterminer l'identité de dispositifs de transmission dans des installations de télécommunication, notamment de téléphonie qui, en soi ou en tant qu'un parmi plusieurs, sont respectivement associés de façon fixe à une zone d'origine déterminée, caractérisée individuellement par une ligne de liaison d'arrivée, et qui par conséquent peuvent être couplés individuellement lors de l'établissement d'une communication téléphonique, notamment une communication téléphonique internationale, suivant la zone d'origine de l'abonné demandeur, et dans lequel, au moyen d'organes de commutation pouvant être commandés de façon correspondante, une voie de commande, qui sert à l'échange de signaux, peut être reliée individuellement à un traducteur qui délivre, entre autres, des informations pour l'établissement de la communication dont l'acheminement doit se poursuivre et pour l'attribution d'une cadence de taxation, à l'occasion de quoi, après que le traducteur ait demandé cette voie de commande pour détourner le dispositif de transmission respectivement occupé, un signal de contrôle est renvoyé au traducteur par l'intermédiaire de la voie de commande commandée à cet effet, et ce signal de contrôle peut être enregistré, respectivement en association avec une zone d'origine, par un moyen de commutation indicateur qui caractérise cette zone respective pour l'évaluation ultérieure, caractérisé par le fait qu'en tant que moyen de commutation indicateur pour le signal de contrôle respectivement appliqué sans mise à la terre, on utilise un élément de couplage optoélectronique (OK); que, rapporté à chaque circuit de contrôle formé de la façon indiquée pour l'enregistrement final (K) d'un signal qui y apparaît, un temps de retard (V), adapté à la durée prévue de l'impulsion perturbatrice, doit être dépassé; que l'application du signal de contrôle (Up) doit tout d'abord être maintenue au moins pour un intervalle de temps (Z) supérieur du temps de retard maximum possible, indépendamment d'un enregistrement effectué; et qu'un enregistrement multiple effectué pendant cet intervalle de temps est affiché (AZ) en plus.

2. Montage suivant la revendication 1, caractérisé par le fait que la commande active pour l'élément de commande provoquant l'application sans mise à la terre du signal de contrôle représentant un signal de tension continue, commençant avec le signal (signal de sortie de G) produit lors d'un enregistrement effectué est permise par un élément de temporisation (Z), déclenché de ce fait, pour l'intervalle de temps prédéterminé.